Europäisches Patentamt

European Patent Office

Office européen des brevets

(19)

(11) Publication number: **0 117 157
B1**

## EUROPEAN PATENT SPECIFICATION

(12)

(45) Date of publication of patent specification: **17.08.88**

(21) Application number: **84301133.9**

(22) Date of filing: **22.02.84**

(51) Int. Cl.⁴: **H 02 K 7/00, B 60 K 9/00,
B 63 H 21/20**

(54) **Multi-driving system.**

(30) Priority: **22.02.83 GB 8304848**

(43) Date of publication of application:
**29.08.84 Bulletin 84/35**

(45) Publication of the grant of the patent:
**17.08.88 Bulletin 88/33**

(84) Designated Contracting States:
**AT BE CH DE FR GB IT LI LU NL SE**

(56) References cited:
**DE-C- 743 497
GB-A-1 556 164
US-A-3 791 473**

**MOT AUTO-JOURNAL, 1973, no. 18,
September 8, Stuttgart K. FREUND
"Fahrbericht: Hybridantrieb" pages 46, 48, 49**

(73) Proprietor: **Yang, Tai-Her
5-1 Tay Pyng St.
Shi Hwu Jenn Jang Huah Shiann (TW)**

(72) Inventor: **Yang, Tai-Her
5-1 Tay Pyng St.
Shi Hwu Jenn Jang Huah Shiann (TW)**

(74) Representative: **Arthur, Bryan Edward et al
Withers & Rogers 4 Dyer's Buildings Holborn
London EC1N 2JT (GB)**

EP 0 117 157 B1

Courier Press, Leamington Spa, England.

**Description**

This invention relates to a multi-driving system, and in particular to a multi-driving system used for driving a vehicle such as a car, ship, or flying machine.

Conventional vehicles often employ rotary driving systems using an internal combustion engine. Due to recent increases in oil prices as well as to noise and air pollution problems, electrical driving systems have been used to replace the internal combustion engine in some vehicles. Unfortunately, such electrically-driven vehicles have limited range and speed capability because of the limited power capacity and the large weight and volume of conventional electrical batteries.

Another alternative is to use an internal combustion engine driven at a constant speed to drive a generator to charge the batteries used to provide power to the electrical driving motor of the vehicle. This method increases efficiency, but still adds to noise and air pollution. Yet another method used is to provide a vehicle with both an internal combustion engine and an electrical motor, the outputs of which may be used either separately or simultaneously. However, this method has previously been undesirable because of the high manufacturing cost and the great bulk of the resulting driving system.

In US patent 3791473 it is. proposed to use, in combination, an engine, an electric motor, and a battery for supplying power to a vehicle. The engine is mechanically coupled to the rotor of the electric motor. The rotor, in turn, mechanically coupled to the output shaft of the combination. In this connection, attention is also drawn to a similar arrangement disclosed in MOT Auto-Journal, 1973 No. 18, pages 46—49. Patent DE—C—747497 discloses an electromagnetic drive in which both the armature and the field assembly are rotatable. The engine is coupled to the field magnet system and the armature is coupled to the output shaft means. The present invention, which is defined by the claims appended hereto, makes use of the above, in combination with other features, to produce a multi-driving system which is capable of various different modes of operation, and which does not have the great bulk of prior art systems.

BRIEF DESCRIPTION OF THE DRAWINGS

FIGURE 1 is a schematic illustration of a presently preferred embodiment of a multi-driving system in accordance with the present invention;

FIGURE 2 is a schematic diagram of the control device block of the embodiment shown in FIGURE 1;

FIGURE 3 is a schematic diagram of an embodiment of a multi-voltage direct current power supply circuit applicable in connection with the present invention;

FIGURE 4 is a schematic diagram of the trigger and control circuit block and the preset unit block shown in FIGURE 3; and

FIGURE 5 is a graphical illustration of the voltage output of the circuit shown in FIGURE 3.

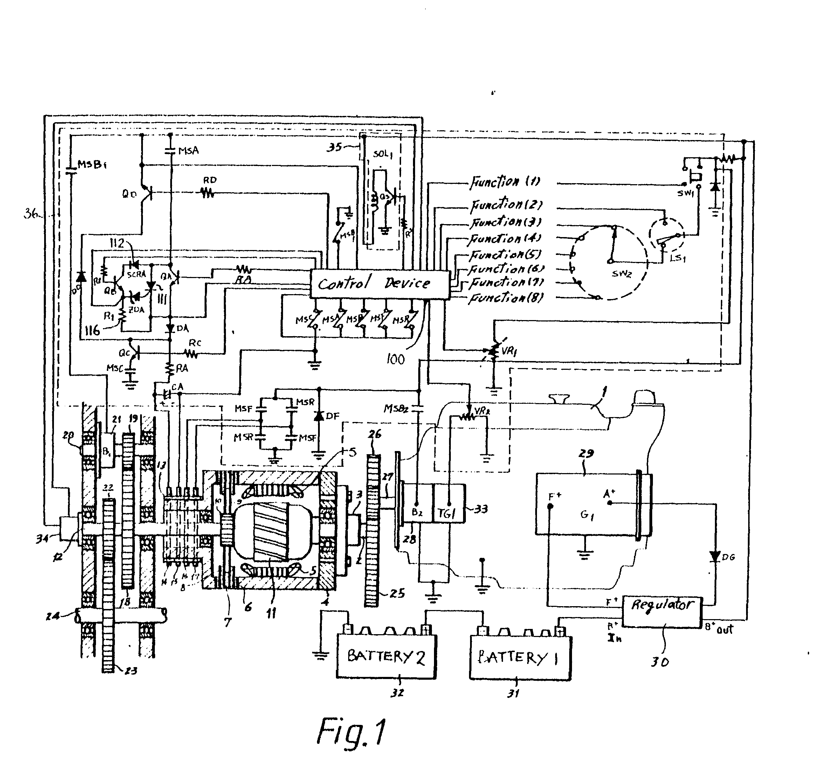

Referring to FIGURE 1, shown is a presently preferred embodiment of a series-coupled multi-driving system in accordance with the present invention. An internal combustion engine 1, which uses conventional fuel (such as gasoline, diesel, oil, alcohol or gas) generates a rotational output at rotary output axle 2. A wheel-shaped output shaft may be used. Rotary output axle 2 is coupled by coupler 3 to rotary drive mechanism 4. Coupler 3 may comprise any conventional axle-to-axle or axle-to-coaxle coupler (such as gears, belts, sprockets or a universal joint).

Rotary drive mechanism 4 may include a bearing and a fixed mechanical structure at one or both ends for supporting the mechanism. Rotary drive mechanism 4 includes an armature 11, which may be a cylinder-shaped D.C. armature with a conventional winding and a tooth-shaped iron core. Alternatively, armature 11 may include a printing-type armature rotor, a cup-shaped armature rotor, an armature rotor without an iron core, or any other conventional D.C. armature rotor. An output axle 12 is coupled to armature 11.

Mounted inside of rotary drive mechanism 4 are two stator excitation windings 5. Excitation windings 5 are controlled by a controller 36, and generate a magnetic field corresponding to the strength of the input D.C. current provided to the windings through conductive rings 16 and 17. Alternatively, a permanent magnetic may be used for producing the magnetic field in rotary drive mechanism 4.

Mounted to rotary drive mechanism 4 is a brush seat insulating sleeve 6, to which is connected a brush seat insulating lid 7. A brush seat 8 supports brushes 9, which are in contact with a rotary armature commutator 10. Rotary armature commutator 10 is of suitably cylindrical shape, and is in contact with two of brushes 9, the brushes being installed at different sides of the commutator.

An insulated slip ring bushing 13 is provided on rotary drive mechanism 4. Four slip rings 14, 15, 16 and 17 are mounted onto bushing 13. Armature output/input slip rings 14 and 15 are connected to the output and the input of brush seats 8. Magnetic field input/output slip rings 16 and 17 are separately connected to the ends of stator excitation windings 5 (previously described).

A brake gear 18 is fixedly mounted on output shaft 12 by conventional means (such as a key or a. pin). Brake gear 18 is engaged with a brake gear 19, brake gear 19 being fixedly mounted onto a shaft 20 by conventional means (such as a key or a pin). An electromagnetic brake 21 is connected to shaft 20 (by a key, a pin, etc.), and will produce braking torque when energized.

A transmission gear 22 is fixedly mounted to shaft 12 by conventional means (such as a key or a pin). Transmission gear 22 is coupled to output axle gear 23. Output axle gear 23 is fixedly coupled to an output axle 24 by conventional means (such as a key or a pin). The rotational energy of output shaft 12 is thus transferred to output axle 24 by transmission gear 22 and output axle gear 23.

An input terminal brake gear 25 is fixedly attached to shaft 2 at the input of rotary drive mechanism 4 by conventional means (such as a key). Input terminal brake gear 26 is fixedly attached to an output terminal brake axle 27 (by a conventional method such as a key or a pin). Electromagnetic braking device 28 will generate braking torque when it is energized.

An auxiliary generator 29 (suitably a D.C. generator or an A.C. generator the output of which is rectified by a rectifier) is provided. Generator 29 may be driven through a belt (or some other conventional coupling method) by internal combustion engine 1. Generator 29 is used to generate power.

A voltage regulator 30 is connected to the electrical output of generator 29, and is used for controlling the generator under variable engine speed conditions to provide a stable voltage output to charge a battery. A pair of batteries 31 and 32 are connected in series between voltage regulator 30 and a ground terminal.

A speed sensor 33 is coupled to output terminal brake axle 27. Speed sensor 33 generates a signal (either analog or digital) corresponding to the speed of internal combustion engine 1. Speed sensor 33 may be any conventional speed sensing device (such as a photocell or electromagnetic speed sensor). Speed sensor 33 may be coupled to output terminal brake axle 27 by any method such that the rotational speed of the shaft which it is measuring rotates in direct proportion to the rotational speed of internal combustion engine 1.

A speed sensor 34 is coupled to output axle 12 and generates a signal (either analog or digital) corresponding to the angular velocity of the output axle. Speed sensor 34 may be any conventional shaft speed sensor (such as a photocell or electromagnetic speed sensor). Speed sensor 34 may be coupled to output shaft 12 by any method such that the shaft the speed of which speed sensor 34 measures rotates in direct proportion to the angular velocity of output axle 12.

An electromagnetic accelerator adjustment driver 35 is responsive to the output of speed sensor 33. Accelerator adjustment driver 35 actuates an accelerator to cause internal combustion engine 1 to operate at a predetermined speed.

An electronic controller 36 is used to control the various elements of the multi-driving system. Electronic controller 36 may comprise conventional switches, potentiometers, photocells, solid state and other electronic elements, a microcomputer, etc. Electronic controller 36 comprises a control device 100 and a driving interface element.

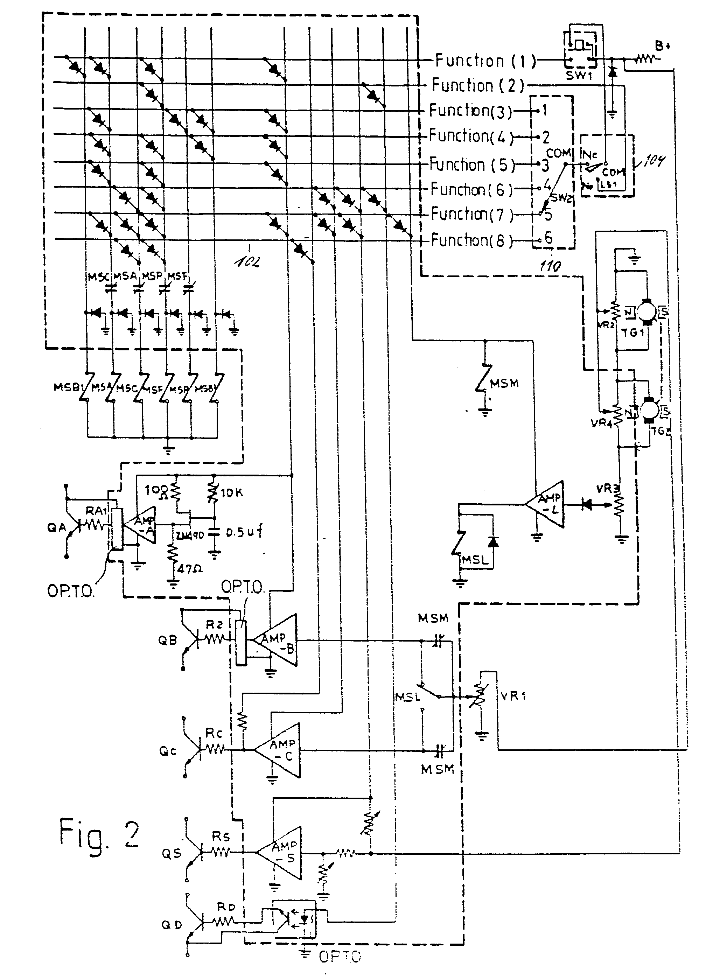

Referring now to FIGURES 1 and 2, an engine starting switch SW1 is connected to the output of voltage regulator 30. A contact A of engine starting switch SW1 is connected to the input terminal of a program matrix 102, while a contact B of the switch is connected to a common terminal of a brake switch 104. Brake switch 104 is a regeneration power brake switch, and is connected to a brake pedal (not shown). A contact 106 of brake switch 104 is connected to program matrix 102, while another contact 108 is connected to the common terminal of a driver selection switch 110.

Driver selection switch 110 is used to introduce commands to control the function of the multi-driving system. The position of driver selection switch 110 may be positioned to start internal combustion engine 1 and to regenerate power for braking. The rotary drive mechanism 4 may be operated in a forward or a reverse driving mode, or to drive in synchronization with internal combustion engine 1. Internal combustion engine 1 may be run at a constant speed. The rotary drive mechanism 4 may perform the functions of a transmission, a power generator and a coupler simultaneously. Rotary drive mechanism 4 may be operated in a coupling mode, and may then operate the accelerator (not shown) to control the internal combustion engine 1 for transmission of the engine output.

An output/input adjusting resistor VR1 may operate synchronously with the accelerator (not shown).

Electronic controller 36 includes a program matrix 102, and switching and amplification elements (which may comprise electric, electronic or microcomputer devices) to process the output of the program matrix. Electronic controller 36 takes as inputs the output of speed sensors 33 and 34. Electronic controller 36 generates a number of switching outputs by controlling field polarity switches MSF and MSR, an armature drive switch transistor QA, a wave-clipping switch SCRA, a potential preset transistor QB, a switch MSA, a generaor coupling operation switch MSC, a wave-clipping control transistor QC, a regenerated power brake control transistor QD, a control transistor QS (for controlling accelerator adjustment driver 35 to maintain constant speed of internal combustion engine 1), and brake device switches MSB1 and MSB2 (which actuate electromagnetic brakes 21 and 28, respectively).

The positive terminal of the power supply (the output terminal of voltage regulator 30) is connected to a thyristor (SCR) 111. The anode of SCR 111 is connected to the collector of an NPN power transistor QA, while the cathode of SCR 111 is connected to the emitter of transistor QA. The base of transistor QA is driven by a pulse signal of a selected frequency, which drives the transistor into saturation and cutoff. The anode of a diode 112 is connected to the anode of SCR 111, while the cathode of diode 112 is connected to the collector of an NPN control transistor QB. The emitter of control transistor QB is connected to a bias resistor 116 and to the cathode of a zener diode ZDA. The other terminal of resistor 116 is connected to the cathode of SCR 111, while the anode of zener diode ZDA is connected to the gate of the SCR. Zener diode ZDA selects an operating voltage.

Parallel-connected power transistor QA and SCR 111 are connected in series with a current limiting resistor RA and the D.C. armature 11 (through slip rings 14 and 15). Slip rings 14 and 15 may, if necessary, be shunted by a capacitor CA.

When power is supplied by voltage regulator 30, and a predetermined driving signal is delivered to the base of power transistor QA from control device 100 (through resistor RA), SCR 111 will be triggered if:

$$\frac{VAK.R_{116}}{R_{116} + R_{QB}} > VZDA + VG$$

(where VAK is the voltage across SCR 111, $R_{116}$ is the resistance of bias resistor 116, $R_{QB}$ is the internal resistance of control transistor QB, $V_{ZDA}$ is the zener voltage of zener diode ZDA, and VG is the triggering voltage of SCR 111). When SCR 111 is triggered, armature 11 and capacitor CA will be energized through current limiting resistor RA. When power transistor QA becomes conductive, SCR 111 will turn off, and a voltage $V_{CA}$ will remain across capacitor CA.

SCR 111 will become conductive again when

$$\frac{VAK.R_{116}}{R_{116} + R_{QB}} > VZDA + VG + VCA$$

(where $V_{CA}$ is the voltage across capacitor CA, as mentioned above).

SCR 111 will be temporarily cut off when

$$\frac{V_{AK}.R_{116}}{R116 + RQB} < VZDA + VG + VCA$$

At this time, capacitor CA will continuously supply current to the load; VCA will decrease until SCR 111 triggers and conducts once again.

The voltage across transistor QB will be variable.

Control transistor QB and bias resistor R116 may be replaced with a three-terminal variable resistor. Additionally, capacitor CA may be replaced with a counter-E.M.F. reference voltage. Current limiting resistor RA may be connected to the cathode of SCR 111 and to bias resistor R116.

A capacitor may be connected in parallel to resistor RA to provide a reverse bias to the bias provided by control device 100. When the next conductive cycle occurs, the reverse bias provided by such a parallel capacitor will delay the time at which power transistor QA conducts and thus limit the current, to provide over-current protection.

The regenerated power braking function may be provided when the armature voltage produced by armature 11 of rotary drive mechanism 4 is higher than the voltage produced by batteries 31 and 32. In this case, a switching transistor QD (which is connected in series with a diode DD to provide reverse voltage protection) conducts. Voltage is applied to perform a regenerated feedback braking function. A DC to DC converter charges batteries 31 and 32 with stepped-up voltage.

For the multi-driving system to function as a coupling drive transmission, armature control and magnetic field control must be provided.

To control armature 11, a constant exciting field is provided and an electromechanical or solid state element is connected in parallel to the output terminal of the armature for generating circulating current to provide coupling torque. Control between the circulating current value, the coupling torque and the coupling speed may be obtained by means of a resistor connected in series with a solid state switching element operating in a clipper mode. An alternative method of magnetic field control is to short-circuit the output terminal of a switching element, and to control the coupling torque by means of the magnitude of the excitation field in order to change the coupling speed.

When the rotary drive mechanism 4 is used for driving, power regeneration, or generating power coupling, it may, depending upon the output characteristics required, use series excitation, shunt excitation or compound excitation connections. Alternatively, a series excitation and driving connection (accomplished by means of control elements that are connected in series with the shunt excitation field and the armature 11) may be used to increase the excitation force to obtain approximate series excitation running characteristics when the armature load current is increased.

The control of the multi-driving system to control it to perform in its various modes will now be described.

To start internal combustion engine 1, engine starting switch SW1 (suitably a push-button switch) is turned on. Program matrix 102 will produce an output to actuate brake 21 (which is indirectly coupled to output axle 24). Magnetic field switch MSF and armature switch MSA will be closed, and a control amplifier (a part of the armature drive control circuit) will be energized. If output/input regulating resistor VR1 (connected to the accelerator) is at an appropriate resistance value (for instance, because the accelerator is being stepped on), the armature drive control circuit will provide a current input to armature 11 to generate rotational energy to start internal combustion engine 1.

Once the system is running, if the brake (not shown) is stepped on, a brake switch 104 will close, causing the common supply to be connected to drive selective switch 110 and program matrix 102 to maintain the excitation current of rotary drive mechanism 4 at a maximum value. When a feedback transistor QD is turned on, the high speed inertia dynamic force of rotary drive mechanism 4 will be converted into electric energy to charge batteries 31 and 32.

To cause rotary drive mechanism 4 to operate in a reverse driving mode, the position of drive selective switch 110 is selected so that program matrix 102 produces an output to actuate electromagnetic brake 28. When reverse exciting electromagnetic switch MSR is turned on, an excitation field is created. When armature driving electro-magnetic switch MSA is turned on, rotary drive mechanism 4 will deliver a reverse output.

In addition to changing the driving direction of rotary drive mechanism 4 by means of a gear assembly, the driving direction may also be changed by applying armature current to armature 11 in a reverse direction upon using rotary drive mechanism in a driving mode. Speed control may be performed by means of a waveclipping circuit connected in series to the input terminal of armature 11 and receiving a control signal from variable resistor VR1 (which is connected to the accelerator).

To cause rotary drive mechanism 4 to operate in a forward driving mode, drive selective switch 110 is set at a position which causes program matrix 102 to produce an output to energize electromagnetic brake 28. Simultaneously, forward exciting switch MSF is turned on, causing an excitation field to be produced. Armature driving switch MSA is turned on as well. The waveclipping circuit connected in series to the input terminal of armature 11 is controlled by variable resistor VR1 (connected to the accelerator). A corresponding drive output is produced.

To simultaneously drive output shaft 24 with the output of internal combustion engine 1 and rotary drive mechanism 4, the position of driver selective switch 110 is set to an appropriate position to control program matrix 102. Forward exciting electromagnetic switch MSF is turned on, causing excitation windings 5 to produce an electromagnetic field. Additionally, armature drive electromagnetic switch MSA is turned on, and the wave-clipping control circuit connected in series with the input of armature 11 is controlled by variable resistor VR1. When the accelerator is stepped on, the resistance of variable resistor VR1 is changed, causing internal combustion engine 1 and rotary drive mechanism 4 to simultaneously drive output shaft 24.

To maintain internal combustion engine 1 at constant rotational speed while operating rotary drive mechanism 4 in a transmission mode, the feedback signal produced by speed sensor 33 (indicative of the angular velocity of output axle 26 of the engine) is applied to a drive comparison circuit for driving an electromagnetic attractive accelerator regulator for timely regulation of the accelerator to maintain constant engine running speed. Constant speed may also be maintained by using a conventional centrifugal constant speed accelerator regulator (or any other constant speed maintaining means).

When internal combustion engine 1 is running at a constant speed, its output will increase the excitation force of the magnetic field produced by excitation windings 5 of rotary drive mechanism 4. The output current produced by armature 11 will (through the wave-clipping switch connected in parallel to its output terminal) vary so as to change the coupling torque for regulating the rotational output. The output torque may also be changed by short-circuiting both ends of armature 11 in order to vary the field strength. Alternatively, any conventional wave-clipping circuit may be employed.

Speed sensor 33 (producing an output indicative of the R.P.M. of internal combustion engine 1) and the signal of speed sensor 34 (indicative of the angular velocity of output axle 24) may be connected in reverse series. When coupling low rotational speeds, a signal is generated which causes the voltage applied to variable resistor VR1 to switch from the generated power coupling circuit to the supplied power driving wave-clipping control circuit to cause the rotary drive mechanism 4 to increase the speed of output axle 24. The signal applied to variable resistor VR1 is changed from the generated power coupling circuit to the supply power driving circuit because the maximum angular velocity that internal combustion engine 1 is designed for is lower than the maximum angular velocity which rotary drive mechanism 4 is capable of producing. In other words, at the point at which this change occurs, the generated voltage of rotary drive mechanism 4 is lower than the voltage of batteries 31 and 32 because of a reduced field current supplied to excitation windings 5. The generated voltage has a reverse polarity with respect to the driving input voltage to batteries 31 and 32.

When rotary drive mechanism 4 is used in a transmission coupling mode as a clutch, the excitation windings 5 of rotary drive mechanism 4 are supplied with current such that they produce a maximum excitation magnetic field. Thus, armature 11 performs maximum generated power coupling. A transmitted driving output may be obtained by using a conventional accelerator regulating method to control the speed of internal combustion engine 1.

To increase coupling efficiency, a clutch (driven conventionally by mechanical, pneumatic, hydraulic or electromagnetic actuating means) may be installed between the rotation driving field and the rotation driving stator to operate as a mechanical friction-coupling transmission device.

If armature 11 of rotary drive mechanism 4 and associated slip rings 16 and 17 and rotary armature commutator 10 have the same number of poles as that of the magnetic excitation field, the magnetic excitation field can be produced by a permanent magnet or a direct current electromagnetic field. In such a case, the rotor may be driven by an electro-mechanical or solid state switching assembly which continuously varies the polarity of the current supplied so as to provide the rotor winding with an alternating current having an adjustable frequency. Coupling may be performed by applying a D.C. excitation current to the rotor to permit the field and the rotor to synchronously attract one another (for synchronous coupling), or by adding a variable resistor to change the degree of coupling (thus operating similar to a A.C. winding rotor induction device that is controlled with an external series resistor). If there are a different number of field poles in rotary drive mechanism 4 than there are rotor poles, but if the poles are appropriately distributed, a step drive and coupling function may be obtained. In such a case, the speed control method is the same as that discussed above. In comparing the various armature control arrangements for the different modes of operation of rotary drive mechanism 4 discussed above, the only difference is that a vibrator (or an analog volume adjustment control circuit) is used instead of the D.C. carrier wave; operation and control will, however, remain the same.

Rotary drive mechanism 4 may, if necessary, be modified by constructing it to have inner rotating magnetic field windings.

## A MULTI-VOLTAGE D.C. POWER SUPPLY CIRCUIT

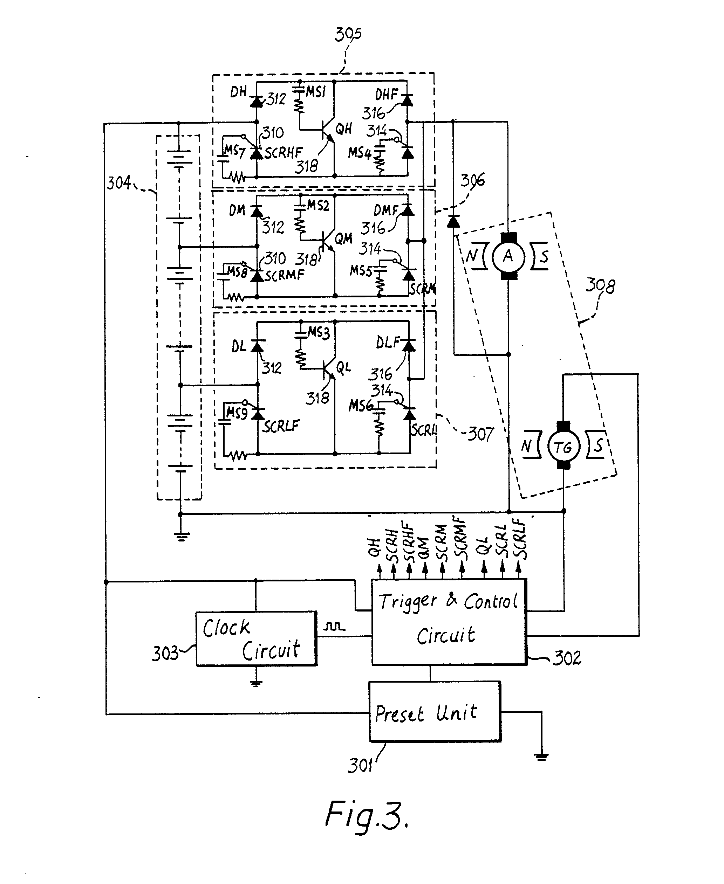

The presently preferred embodiment of a multi-voltage D.C. power supply circuit to be used in conjunction with the multi-driving system shown in FIGURES 1 and 2 is shown in FIGURE 3. The power supply circuit includes two or more sets of D.C. power supplies 304 to provide different voltages having common grounds. The tap terminals of each output voltage is connected in series to a bridge-type switching element assembly 305—307. Through the operation of a preset unit 301, a trigger and control circuit 302 and a time sequence circuit control 303, various switching elements may be changed to "on" or "off" for preset periods of time so as to vary the output rms values for obtaining lower ripple echelon-type D.C. voltage outputs.

Preset unit 301 comprises a conventional digital or analog device using electric or electronic elements for presetting output voltage or current. Preset unit 301 is connected to trigger and control circuit 302, which is a control circuit (comprising conventional electric, electronic or microcomputer elements) for controlling solid state or electric switching elements, as well as controlling bridge-type switching element assembly 305, to deliver driving output and regenerated power feedback.

A clock circuit 303 (comprising conventional electric and electronic elements) produces time sequence pulses and generates an output voltage to monitor the cycles so as to control the trigger and control circuit 302 to yield a corresponding output.

A storage battery set 304 has many tap terminals, and the ampere hour ratings of each voltage echelon which it includes may be determined by the rate of usage.

Switching element assembly 305 is connected in series to the various voltage taps of storage battery set 304. Switching element assembly 305 is a bridge circuit comprising a thyristor 314 and a diode 312 use for driving, and a thyristor 310 and diode 316 use for feedback. The point at which the feed back thyristor 310 and driving diode 312 connect is connected to the highest output voltage terminal of storage battery set 304. The junction between driving thyristor 314 and feedback diode 316 is connected to the armature of the electromagnetic rotary drive mechanism 308. The positive terminal of the output connection point of the two diodes 312 and 316 is connected to the collector of an NPN switch transistor 318, the emitter of which is connected to the common connecting point of the anodes of thyristors 310 and 314 in order to accept triggering control from the trigger and control circuit 302.

Switching element assemblies 306 and 307 have the same structure as that of switching element assembly 305, and are connected to lower output taps of storage battery set 304 in order to accept control. The number of switching element assemblies installed may be varied depending upon the number of taps of storage battery set 304.

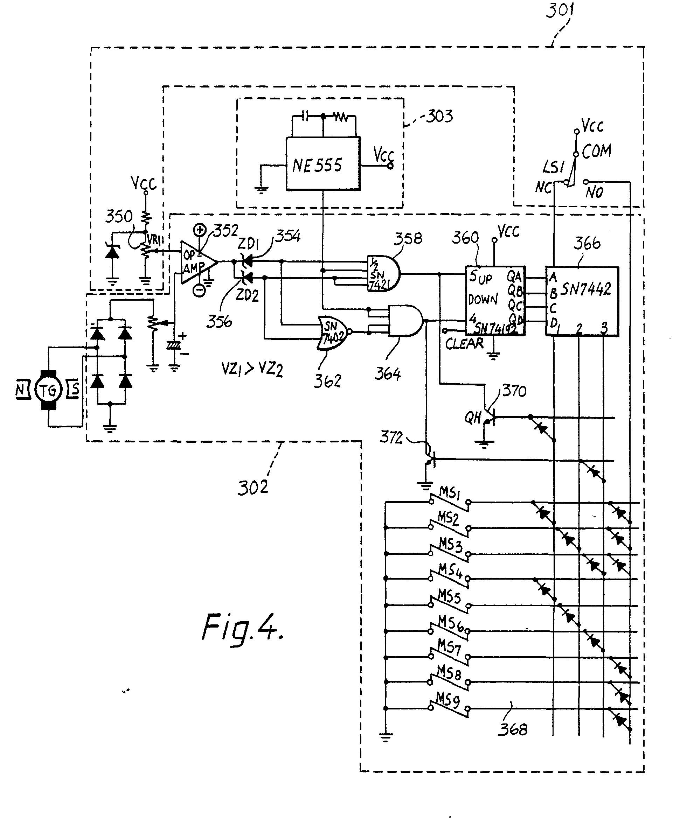

Referring to FIGURE 4, a detailed schematic diagram of the preset unit 301, trigger and control circuit 302 and clock circuit 303 shown in FIGURE 3 is shown.

An operational amplifier 352 is used to compare the feedback voltage of the speed sensing feedback generator with a preset potential on a potentiometer 350. Operation amplifier 352 amplifies the output and delivers it to two zener diodes 354 and 356, which have different selected voltages. The output terminals of zener diodes 354 and 356 and the output of clock circuit 303 (which suitably comprises an NE555) are all coupled to the inputs of an AND gate 358 (suitably an SN7421), the output of which is coupled to the up input of an up/down counter 360 (suitably SN74192). The output signal of zener diodes 354 and 356 is also coupled to the input of a NOR gate 362 (suitably an SN7402), the output of which is connected along with the output of clock circuit 303 to an AND gate 364 (suitably an SN7421). The output of AND gate 364 is connected to the down input of counter 360.

When the system is turned on, counter 360 receives a clear instruction and resets to zero. When counter 360 receives an input, it performs up/down counting. The output of counter 360 is connected to a decoder 366 (suitably an SN7442), which converts the input binary signal into a decimal signal that is coupled to a driving matrix 368. The input terminals and the ground terminal of counter 360 are respectively connected in parallel to signal short-circuit transistors 370 and 372 in order to limit the voltage adjustment scope for driving switch element assemblies 305, 306 and 307 (shown in FIGURE 3) to conduct corresponding driving.

Referring to FIGURES 3 and 4, the feedback signal of the feedback speed of the sensing generator is compared with a preset voltage furnished to operation amplifier 352 by potentiometer 350. Operational amplifier 352 will generate an output voltage higher than the zener voltages of zener diodies 354 and 356 when the feedback signal of the feedback speed sensing generator is higher than the preset voltage. When a clock signal appears at the output of clock circuit 303, a signal will be provided on the UP terminal of counter 360 by AND gate 358 to generate a position pulse to cause counter 360 to count up. Decoder 366 will, through driving matrix 368, cause an appropriate one of switching element assemblies 305, 306 or 307 to select its corresponding output tap from battery storage set 304. As counter 360 counts up, a higher voltage tap will be selected.

When the output of operational amplifier 352 is lower than the zener voltage of zener diode 356 but higher than the zener voltage of zener diode 354, counter 360 will count neither up nor down..

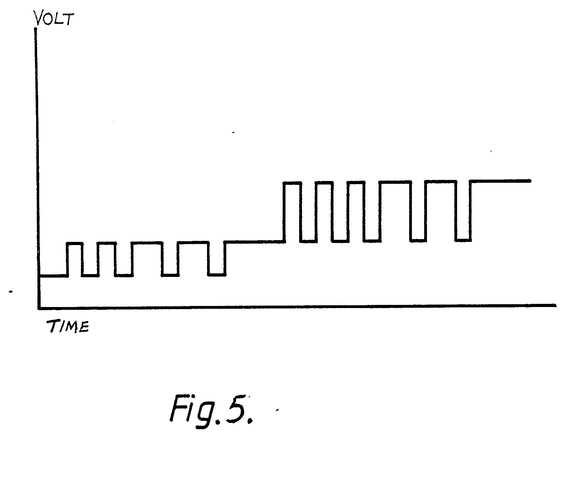

When the output of operational amplifier 352 is lower than the zener voltages of both zener diodes 354 and 356 (i.e. the reference voltage is higher than the feedback signal from the feedback speed sensing generator), the output of NOR gate 362 goes high. When a clock signal is generated by clock circuit 303, the output of AND gate 364 goes high, causing counter 360 to count down. When counter 360 counts down, a switching element assembly 305, 306 or 307 corresponding to a lower voltage tap of battery storage set 304 is selected through decoder 356 and driving matrix 368. Referring to FIGURE 5, an output voltage wave form produced by the circuit shown in FIGURE 4 is shown.

It is also possible to install a switch LS1 to a brake device which will operate when a brake is applied. The normally closed contacts of switch LS1 are connected between the power supply and decoder 366, while the normally open contacts of switch LS1 are connected between the power supply and the input terminal of the regenerated brake input line of driving matrix 368. The output of driving matrix 368 may simultaneously drive the thyristors 310 for feedback, and switching transistors 318 to generate charging feedback.

## Claims

1. Multi-driving system comprising an engine (1) and an electro-magnetic rotary drive mechanism (4) with a rotatable field assembly (5) and a rotatable DC armature (11), one of the rotatable members coupled to the engine (1) and the other rotatable member coupled to an output shaft (24), the armature being supplied with electrical energy from a battery (31, 32), the system being further provided with an electrically operable brake (21) acting on the output shaft (12), speed sensors (33, 34) for sensing the rotational speeds of the engine and/or the output shaft, and an electronic control system (36) responsive to inputs from a mode selector switch (110), and to drive controls and/or signals from the speed sensors, and arranged to operate the engine controls and/or electrically operable brake to cause the apparatus to operate in a selected one of a plurality of modes, the modes of operation including at least two of the following, i.e. those in which:

(a) the output shaft is braked, and power from the battery is applied to the rotary drive mechanism (4) to start the engine (1);

(b) the engine speed remains constant, and the rotary drive mechanism (4) controls the speed or torque of the output shaft;

(c) the rotary drive mechanism (4) acts as a regenerative brake, decelerating the output shaft (24) and supplying power to the battery (31, 32);

(d) power is supplied to the output shaft derived in part from the engine (1) and in part from the battery (31, 32);

(e) the rotary drive mechanism (4) acts as an electromagnetic clutch with the armature being shortcircuited and the field assembly being either fully energised or de-energised.

2. Apparatus according to Claim 1 further including an electrically-operable brake (28) operable to hold the engine stationary, and the available modes of operation further include at least one of the following, in which:

(f) the engine is held stationary and the output shaft is driven in a forward direction by power supplied to the rotary drive mechanism from the battery;

(g) the engine is held stationary and the output shaft is driven in a reverse direction by power supplied to the rotary drive mechanism from the battery.

## Patentansprüche

1. Vielfachantriebsvorrichtung mit einem Motor (1) und einem elektromagnetischen Drehantrieb (4) mit einer drehbaren Feldanordnung (5) und einem drehbaren Gleichstromanker (11), wobei eines der drehbaren Bauteile mit einer Abtriebswelle (24) gekuppelt ist, dem Anker elektrische Energie von einer Batterie (31, 32) zugeführt wird, die Vorrichtung ferner mit einer elektrisch betätigbaren Bremse (21), die auf die Abtriebswelle (12) einwirkt, versehen ist und Drehzahlfühler (33, 34) der Ermittlung der Drehzahl des Motors und/oder der Abtriebswelle dienen, und wobei ein elektronisches Steuersystem (36) auf Eingangssignale von einem Betriebsartenwahlschalter (110) und Antriebsbefehle und/oder Signale der Drehzahlfühler anspricht und angeordnet ist, um die Motordrehzahl und/oder elektrisch betätigbare Bremse zu betätigen, um die Vorrichtung zu veranlassen, in einer ausgewählten von einer Mehrzahl von Betriebsarten zu arbeiten, wobei die Betriebsarten zumindest zwei der folgenden Betriebsarten sind, d.h. Betriebsarten, bei denen

(a) die Abtriebswelle gebremst ist und Energie von der Batterie dem Drehantrieb (4) zum Anlassen des Motors (1) zugeführt wird;

(b) die Motordrehzahl konstant bleibt und der Drehantrieb (4) die Drehzahl oder das Drehmoment der Abtriebswelle steuert;

(c) der Drehantrieb (4) als Bremskraftspeicher arbeitet und dabei die Abtriebswelle (24) bremst und Energie in die Batterie (31, 32) zurükführt;

(d) Leistung der Abtriebswelle zugeführt wird, die zum Teil vom Motor (1) und zum Teil von der Batterie geliefert wird;

(e) der Drehantrieb (4) als elektromagnetische Kupplung wirkt, wobei der Anker kurzgeschlossen ist und die Feldanordnung entweder voll erregt oder entregt ist.

2. Vorrichtung nach Anspruch 1, die ferner einschließt eine elektrisch betätigbare Bremse (28), um den Motor im stationären Betrieb betreiben zu können, wobei die Betriebsarten noch zumindest eine der folgenden Betriebsarten einschließen:

(f) der Motor ist im konstanten Betrieb gehalten, und die Abtriebswelle ist in Vortriebsrichtung angetrieben durch Energie, die dem Drehantrieb von der Batterie zugeführt wird;

(g) der Motor ist im stationären Betrieb gehalten, und die Abtriebswelle ist in entgegengesetzter Richtung angetrieben durch Energie, die dem Drehantreib von der Batterie zugeführt wird.

**Revendications**

1. Groupe d'entraînement multiple comprenant un moteur (1) et un mécanisme moteur électromagnétique (4) rotatif avec un assemblage de champ tournant (5) et un induit tournant à courant continu (11), l'un des éléments tournant étant accouplé au moteur (1) et l'autre élément tournant étant accouplé à un arbre de sortie (24), l'induit étant alimenté avec de l'énergie électrique à partir d'une batterie (31, 32), le groupe étant en outre pourvu d'un frein (21) à commande électrique agissant sur l'arbre de sortie (12), des détecteurs de vitesse (33, 34) pour détecter les vitesses de rotation du moteur et/ou de l'arbre de sortie et un système de commande électronique (36) répondant aux entrées à partir d'un commutateur sélecteur de modes (110), et à des commandes d'entraînement et/ou des signaux des détecteurs de vitesse, et étant arrangé pour faire fonctionner les commandes du moteur et/ou le frein à commande électrique pour que l'appareil fonctionne dans un mode choisi d'une pluralité de modes, les modes de fonctionnement comprenant au moins deux des modes suivants, c-à-d ceux dans lesquels:

(a) l'arbre de sortie est freiné et de la puissance est appliquée à partir de la batterie au mécanisme d'entraînement rotatif (4) pour démarrer le moteur (1);

(b) la vitesse de rotation du moteur reste constante et le mécanisme d'entraînement rotatif (4) commande la vitesse ou le moment de l'arbre de sortie;

(c) le mécanisme d'entraînement rotatif (4) agit comme frein à récupération décélérant l'arbre de sortie (24) et fournissant de la puissance à la batterie (31, 32);

(d) la puissance est fournie à l'arbre de sortie dérivée en partie du moteur (1) et en partie de la batterie (31, 32);

(e) le mécanisme d'entraînement rotatif (4) agit comme embrayage électromagnétique, l'induit étant courcircuité et l'assemblage de champ étant ou bien totalement exité ou bien désexité.

2. Groupe selon la revendication 1, comprenant en outre un frein (28) à commande électrique fonctionnant pour tenir stationnaire le moteur, et les modes de fonctionnement disponibles comprenant en outre au moins un des modes suivants, dans lesquels:

(f) le moteur est tenu stationnaire et l'arbre de sortie est entraîné dans une direction avant par la puissance fournie au mécanisme d'entraînement rotatif par la batterie;

(g) le moteur est tenu stationnaire et l'arbre de sortie est entraîné dans une direction inverse par la puissance fournie au mécanisme d'entraînement rotatif par la batterie.

Fig.1

Fig. 2

**0 117 157**

Fig.3.

Fig.4.

0 117 157

4

Fig.5.